# FASCICULE DE BREVET EUROPEEN

(11) **EP 2 689 093 B1**
(45) Date de publication et mention de la délivrance du brevet: **04.03.2015**
(21) Numéro de dépôt: 12714792.4
(22) Date de dépôt: 15.03.2012
(51) Int. Cl.: E21B 17/01, F16L 1/15, E21B 43/01, E21B 43/013

(54) **MÉTHODE D'INSTALLATION ASSISTÉE D'UNE COLONNE SOUS-MARINE MONTANTE**
VERFAHREN ZUR UNTERSTÜTZTEN INSTALLATION EINES UNTERWASSERSTEIGROHRS
METHOD FOR THE ASSISTED INSTALLATION OF AN UNDERWATER RISER

(30) Priorité: 23.03.2011 FR 1152387
(43) Date de publication de la demande: 29.01.2014
(73) Titulaire: Technip France, 92400 Courbevoie (FR)
(72) Inventeur: LUPPI, Ange, F-30000 Nîmes (FR)
(74) Mandataire: Gendron, Vincent Christian
(86) Numéro de dépôt international: PCT/FR2012/050549
(87) Numéro de publication internationale: WO 2012/127157

(56) Documents cités:
- WO-A1-2010/007225
- WO-A2-2010/052422
- FR-A1- 2 927 651
- FR-A1- 2 938 001
- US-A1- 2005 109 513
- US-A1- 2007 048 093
- US-A1- 2010 209 197
- JEROEN REMERY ET AL: "The Free Standing Flexible Riser: A Novel Riser System for an Optimised Installation Process", OFFSHORE TECHNOLOGY CONFERENCE,, 5 mai 2008 (2008-05-05), pages 1-11, XP007918877,

## Description

La présente invention se rapporte à une méthode d'installation d'une colonne sous-marine montante, ou tour verticale, pour le transport des hydrocarbures entre un fond marin et une surface.

Les colonnes sous-marines montantes sont connues et elles sont installées entre une installation de fond située près d'un puits et une installation de surface située sensiblement au droit de l'installation de fond. Elles comprennent principalement, d'une part une conduite tubulaire verticale, flexible ou bien rigide, qui s'étend depuis l'installation de fond jusqu'à un niveau situé en subsurface où elle est retenue au moyen d'un flotteur, et d'autre part un conduit flexible connecté à la conduite tubulaire au niveau du flotteur et qui lui, s'étend à partir du flotteur pour rejoindre l'installation de surface. Les documents normatifs API-RP-17B montrent des colonnes sous-marines constituées uniquement de conduites flexibles. Des colonnes dites « tours hybrides » où la conduite tubulaire verticale est une conduite rigide sont également mises en oeuvre.

Le flotteur est généralement installé bien en dessous de la surface, dans une zone où les mouvements de l'eau sont moindres en comparaison de ceux de la surface. La conduite tubulaire présente une extrémité inférieure connectée à l'installation de fond et une extrémité supérieure maintenue à travers le flotteur et connectée au conduit flexible. Ainsi, l'hydrocarbure est-il apte à être remonté de l'installation de fond vers l'installation de surface à travers la conduite verticale et le conduit flexible.

Compte tenu du poids des éléments en présence, et du milieu marin, l'installation de ces colonnes sous-marines est coûteuse en temps et en énergie. De plus, l'ajustement précis de l'extrémité inférieure de la conduite tubulaire verticale sur l'installation de fond est malaisé compte tenu précisément des mouvements de surface.

Aussi, pour s'en affranchir il a été imaginé, d'une part d'inonder le flotteur pour l'immerger avec la conduite tubulaire et d'autre part d'installer un câble de traction à ladite extrémité inférieure de la conduite, d'engager ce câble dans des moyens de renvoi situés sur l'installation de fond et de le tirer au moyen d'un autre flotteur immergé en dessous de la surface, de manière à entraîner l'extrémité inférieure vers l'installation de fond. Pour ce faire, le flotteur inondé est progressivement vidé pour reprendre les efforts de traction du câble et pour ajuster précisément l'extrémité inférieure sur l'installation de fond. L'ajustement de la position relative des deux flotteurs qui s'effectue en dessous de la surface en mouvement est plus aisé et partant, la connexion de l'extrémité inférieure sur l'installation de fond s'effectue dans de meilleures conditions.

On pourra se référer au document FR 2 927 651, lequel décrit une telle méthode d'installation.

Cependant, dans certaines conditions d'installation, et notamment lorsque les profondeurs d'eau sont importantes, la conduite tubulaire est relativement longue et le flotteur est conséquemment plus volumineux. Aussi, leur manipulation requiert des moyens de grutage adaptés en conséquence et relativement pesants pour les installations de surface.

Aussi, un problème qui se pose et que vise à résoudre la présente invention, est de fournir une méthode d'installation de colonne sous-marine montante ne nécessitant pas de moyens d'installation supplémentaires particuliers et permettant néanmoins de mettre en oeuvre des conduites tubulaires de grande longueur et leur flotteur associé.

Dans ce but, la présente invention propose une méthode d'installation d'une colonne sous-marine montante pour le transport des hydrocarbures entre un fond marin et une surface marine, ladite méthode étant du type selon laquelle : on fournit une installation de surface et un flotteur aptes à flotter sur ladite surface marine ; on fournit une conduite tubulaire présentant deux extrémités opposées, et on suspend ladite conduite tubulaire audit flotteur par l'une desdites deux extrémités de conduite, tandis que ladite conduite tubulaire s'étend vers ledit fond marin ; on fournit un conduit flexible pour relier ledit flotteur et ladite installation de surface, ledit conduit flexible étant raccordé à ladite une desdites extrémités de conduite tubulaire et ensuite, on leste ledit flotteur pour l'immerger et entraîner ladite autre extrémité de conduite vers ledit fond marin de manière à pouvoir raccorder ladite autre extrémité de conduite dans ledit fond marin. Selon l'invention, on dévide ledit conduit flexible depuis ladite installation de surface pour l'étendre en caténaire entre ledit flotteur et ladite installation de surface de manière à lester ledit flotteur avec ledit conduit flexible dévidé et provoquer l'immersion dudit flotteur, par quoi ladite autre extrémité de conduite est entraînée vers ledit fond marin.

Ainsi, une caractéristique de l'invention réside dans la mise en oeuvre du conduit flexible pour lester le flotteur et la conduite tubulaire et venir ajuster et raccorder l'autre extrémité de conduite, soit l'extrémité inférieure, dans ledit fond marin. Le flotteur est dimensionné en fonction du poids de la conduite tubulaire de manière à ce qu'à l'équilibre, cette dernière puisse être maintenue suspendue verticalement dans l'eau. Grâce, au conduit flexible, qui est avantageusement dévidé entre ledit flotteur et ledit fond marin pour lester ledit flotteur, l'équilibre est rompu, et le propre poids du conduit flexible entraîne le flotteur, et partant la conduite tubulaire, vers le fond marin. Plus de longueur de conduit flexible est dévidée sous le flotteur, vers le fond marin, et plus le flotteur est lesté. Lorsque l'extrémité inférieure approche du fond marin, on arrête de dévider ledit conduit flexible pour stopper la descente comme on l'expliquera plus en détail dans la suite de la description. Ainsi, la position verticale du flotteur est bien moins dépendante des mouvements de l'installation de surface, qui oscille autour d'une position d'équilibre. Au surplus, le flotteur et la conduite tubulaire sont sensiblement à l'équilibre et ne nécessitent pas d'être retenus par des moyens de grutage importants.

Par ailleurs, et selon un mode particulier de mise en oeuvre, on inonde ledit conduit flexible pour augmenter le poids dudit conduit flexible dévidé et par conséquent pour le lester plus encore. Selon un autre mode particulier de mise en oeuvre, on fournit des ballasts avec lesquels on équipe ledit conduit flexible pour augmenter le poids dudit conduit flexible dévidé et là encore, pour augmenter le leste. De la sorte, l'immersion du flotteur est plus aisée et surtout, plus rapide.

Préférentiellement, on raccorde ledit conduit flexible et ladite une desdites extrémités de conduite tubulaire avant de suspendre ladite conduite tubulaire audit flotteur. On réalise ce raccordement en surface, par exemple sur l'installation de surface, à l'air libre, ce qui est bien évidemment plus aisé que dans l'eau. Avantageusement, le conduit flexible est raccordé à la conduite tubulaire par l'intermédiaire d'une partie rigide en col de cygne, et on suspend cette partie rigide à des moyens de grutage situés sur l'installation de surface pour manoeuvrer à la fois la conduite rigide et le conduit flexible.

De plus, on fournit de préférence un flotteur de forme générale cylindrique à directrice circulaire présentant une hauteur et un diamètre dont la fraction est inférieure à 1,5. De la sorte, le flotteur présente tout d'abord une meilleure stabilité par rapport aux flotteurs longitudinaux, ce qui est un avantage pour le remorquage jusqu'au lieu d'installation. Ensuite, un tel flotteur permet, dans certaines circonstances d'installation, de raccorder la conduite tubulaire et le conduit flexible au-dessus dudit flotteur et par conséquent de la surface.

Aussi, et selon une caractéristique de l'invention particulièrement avantageuse, on fournit un flotteur présentant une fente radiale débouchant à l'extérieur dudit flotteur, et on entraîne latéralement ladite une desdites extrémités de conduite tubulaire à travers ladite fente radiale pour suspendre ladite conduite tubulaire audit flotteur. Lorsque la conduite rigide est suspendue aux moyens de grutage par l'intermédiaire de la partie rigide en col de cygne, elle est susceptible d'être portée à travers la fente radiale en actionnant les moyens de grutage de manière à pouvoir accrocher ladite une desdites deux extrémités opposées, soit l'extrémité supérieure, au flotteur. On expliquera plus en détail dans la suite de la description, ce mode d'accrochage.

Selon une variante de réalisation de l'invention, on fournit une conduite tubulaire flexible. Ce choix est guidé par exemple, par la nécessité d'équiper l'annulaire de la conduite avec des moyens d'alimentation en énergie, des moyens de chauffage ou encore des moyens de transport de gaz à travers des ombilicaux. Dans ce cas, il est avantageux de remplir ladite conduite tubulaire avec un gaz sous pression et de raccorder ladite conduite tubulaire flexible avec ledit flotteur pour maintenir ledit flotteur sous pression hydrostatique lors de sa descente. De la sorte, on évite d'une part « l'effet de fond inverse » qui à grande profondeur provoque une destruction partielle locale de la structure de la conduite. D'autre part, on évite l'écrasement du flotteur en le maintenant sous pression.

Au surplus, on fournit une installation de fond située sur ledit fond marin pour recevoir ladite autre extrémité de conduite et on fournit en outre un câble de tirage et des moyens de renvoi dudit câble de tirage, lesdits moyens de renvoi étant montés sur ladite installation de fond, tandis que ledit câble de tirage est d'une part accroché à ladite autre extrémité de conduite et d'autre part engagé à travers lesdits moyens de renvoi pour pouvoir être étiré vers la surface. De la sorte, lorsque l'extrémité inférieure de la conduite tubulaire est en approche de l'installation de fond, en exerçant une traction sur le câble de tirage, on guide l'extrémité inférieure vers des moyens de raccordement. Parallèlement, on remonte le conduit flexible afin de délester progressivement le flotteur et éviter que l'extrémité inférieure de conduite tubulaire ne vienne heurter le fond marin ou l'installation de fond.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle de côté d'une installation de surface permettant de mettre en oeuvre la méthode d'installation selon l'invention, dans une première phase;
- la Figure 2 est une vue schématique partielle de dessus de l'installation illustrée sur la figure 1 ;
- la Figure 3 est une vue schématique de détail d'un élément de la colonne sous-marine montante;
- la Figure 4 est une vue schématique partielle de côté montrant une colonne sous-marine montante dans une deuxième phase d'installation ;
- la Figure 5 est une vue schématique partielle de côté montrant une colonne sous-marine montante dans une troisième phase d'installation ;et,
- la Figure 6 est une vue schématique partielle de côté montrant une colonne sous-marine montante dans une quatrième phase d'installation.

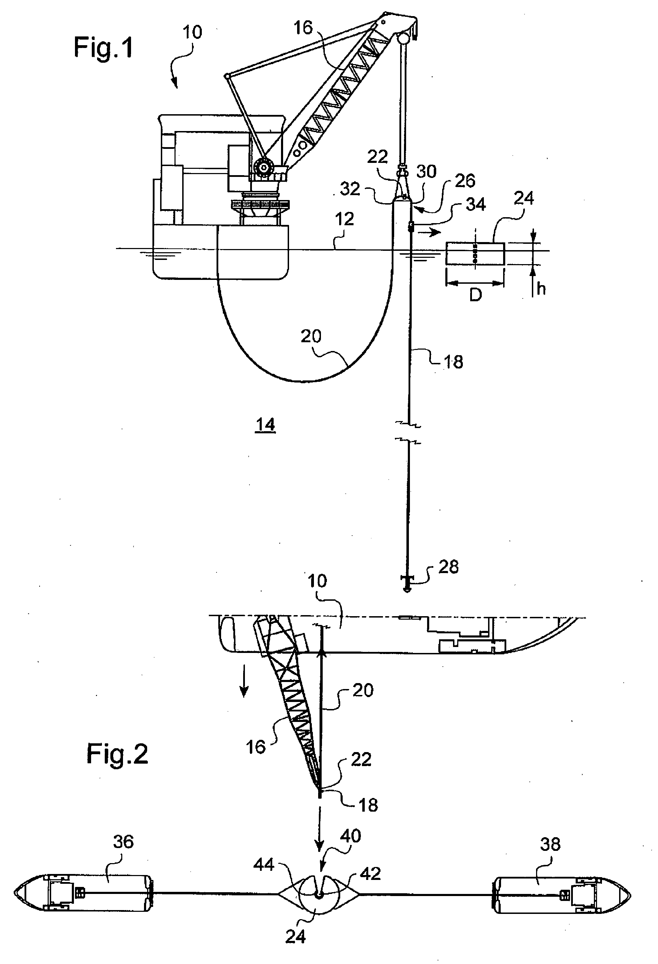

La Figure 1 illustre une installation de surface 10 flottant à la surface 12 d'un milieu marin 14. L'installation de surface 10 est équipée d'une grue 16 à laquelle est suspendue une conduite tubulaire 18 et un conduit flexible 20 par l'intermédiaire d'une partie rigide en col de cygne 22 qui les raccorde. La conduite tubulaire 18, le conduit flexible 20 et la partie rigide en col de cygne 22 sont avantageusement assemblés à l'air libre sur l'installation de surface. En outre, au voisinage de l'installation de surface 10, flotte un flotteur 24 de symétrie sensiblement cylindrique dont le rapport, hauteur h sur diamètre D, est avantageusement inférieur à 1,5, par exemple 0,5. Ce type de flotteur 24, ou bouée plate, présente notamment l'avantage d'offrir une grande stabilité, par rapport aux bouées longitudinales, lorsqu'il est remorqué sur le site d'installation. Il présente d'autres avantages que l'on expliquera ci-dessous après avoir décrit plus précisément la conduite tubulaire 18 et le conduit flexible 20.

La conduite tubulaire 18 est ici une conduite flexible et elle présente une extrémité supérieure 26 et à l'opposé une extrémité inférieure 28. Elle est maintenue suspendue à la partie rigide en col de cygne 22 par son extrémité supérieure 26. La partie rigide en col de cygne 22 comprend un conduit recourbé présentant une extrémité d'entrée 30 à laquelle est raccordée l'extrémité supérieure 26, et à l'opposé, une extrémité de sortie 32 sur laquelle est connecté le conduit flexible 20. La partie rigide en col de cygne 22 est destinée à assurer le transfert d'un hydrocarbure circulant de la conduite tubulaire 18 vers le conduit flexible 20. Elle est maintenue au-dessus de la surface 12 grâce à la grue 16, tandis que le conduit flexible 20 s'étend en caténaire entre la partie rigide en col de cygne 22 et l'installation de surface 10. Seule une partie du conduit flexible 20 est ici étendue en caténaire, tandis que l'autre partie est stockée et de préférence enroulée sur l'installation de surface 10. Le conduit flexible 20 est pesant et c'est la raison pour laquelle, dans l'eau, il s'étend ainsi en caténaire.

En outre, la conduite tubulaire 18 présente, près de son extrémité supérieure 26, un organe d'arrêt circulaire 34 qui s'étend radialement autour de la conduite. Cet organe d'arrêt circulaire 34 permet de suspendre la conduite tubulaire 18 au flotteur 24 comme on l'expliquera ci-après.

On retrouve sur la figure 2, partiellement en vue de dessus, l'installation de surface 10 équipée de sa grue 16 et le flotteur 24 guidé par deux remorqueurs 36, 38 qui agissent dans des sens diamétralement opposés, de manière à pouvoir le maintenir en position relativement fixe par rapport à l'installation de surface 10. Le flotteur 24 présente une fente radiale 40 qui débouche à l'extérieur et à travers laquelle la conduite tubulaire 18 va être guidée grâce à la grue 16 et aux remorqueurs 36, 38. En outre, le flotteur 24 présente un logement axial 42 le traversant de part en part et dans lequel débouche la fente radiale 40. Au surplus, le logement axial 42 présente dans sa partie inférieure un épaulement 44 le rétrécissant. Le logement axial 42 présente, jusqu'à l'épaulement 44, un diamètre supérieur ou égal à celui de l'organe d'arrêt circulaire 34 précité, tandis qu'au-delà de l'épaulement 44, le diamètre du logement axial 42 est inférieur à celui de l'organe d'arrêt 34.

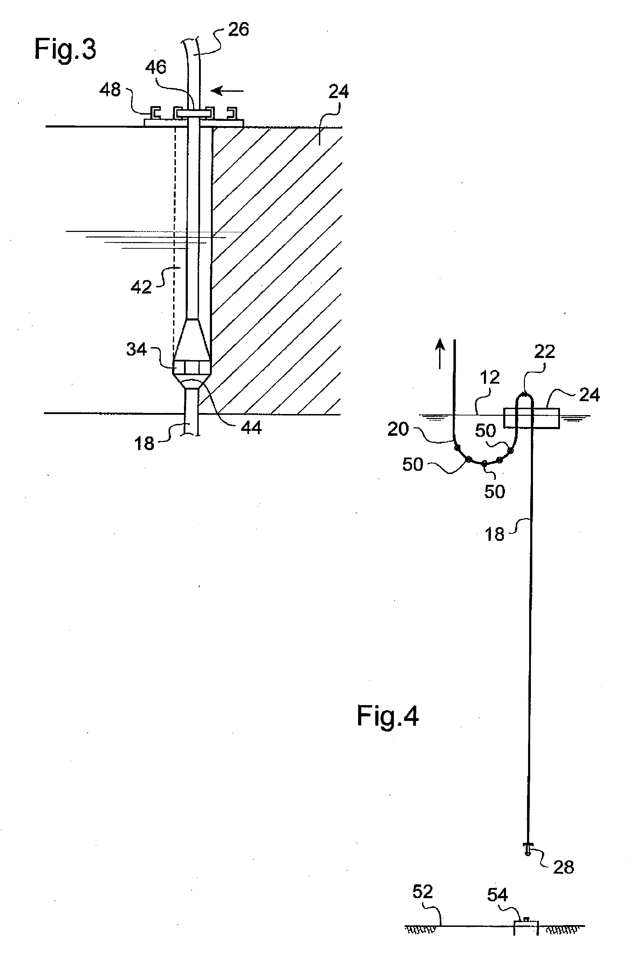

Ainsi, après que la conduite tubulaire 18 a été portée à travers la fente radiale 40 puis à l'intérieur du logement axial 42, en ayant pris soin que l'organe d'arrêt circulaire 34 soit situé au-dessus du flotteur 24, on provoque alors l'abaissement de la conduite tubulaire 18, et l'organe d'arrêt circulaire 34 s'engage alors à l'intérieur du logement axial 42 pour venir prendre appui sur l'épaulement 44 comme illustré en détail sur la figure 3.

On retrouve sur cette figure le flotteur 24 avec son logement axial 42 et son épaulement 44 tandis que l'organe d'arrêt circulaire 34, engagé dans le logement axial 42, est en appui précisément sur l'épaulement 44. De la sorte, l'ensemble du poids de la conduite tubulaire 18 est repris par le flotteur 24. Il est d'ailleurs nécessaire qu'à l'équilibre, le flotteur 24 assure la suspension de la conduite tubulaire 18, de sorte qu'immergé, le flotteur 24 puisse exercer un effort vertical sur la conduite tubulaire 18 de manière à la maintenir sensiblement verticalement. Afin d'ajuster la flottabilité du flotteur 24, il est prévu des compartiments de ballastage inondables, permettant, notamment lorsque la flottabilité est trop importante par rapport au poids de la conduite tubulaire 18, de la diminuer sensiblement.

En outre, la conduite tubulaire 18 comporte entre l'organe d'arrêt circulaire 34 et l'extrémité supérieure 26, une couronne de verrouillage 46 tandis que le flotteur 24 présente un organes de verrouillage 48 à l'intérieur duquel la couronne de verrouillage 46 est susceptible d'être verrouillée. De la sorte, la conduite tubulaire 18 est bloquée en translation par rapport au flotteur 24. On observera que les opérations de verrouillage ou d'ajustement de la conduite tubulaire 18 sur la partie rigide en col de cygne 22, peuvent être effectuées au-dessus du flotteur 24 à l'air libre avant qu'il ne soit immergé.

La grue 16 et la partie rigide en col de cygne 22 sont ensuite désolidarisées tandis que le flotteur 24 est relié à l'installation de surface 10 par l'intermédiaire du conduit flexible 20. Le flotteur 24 flotte à la surface de l'eau 12 tandis que l'extrémité inférieure 28 de la conduite tubulaire 18 est libre et est située à distance du fond marin.

On retrouve, sur la figure 4, cette position relative du flotteur 24 à la surface 12 de l'eau et de la conduite tubulaire 18 suspendue ainsi que le conduit flexible 20 en caténaire. En outre, ce dernier est équipé de ballasts 50, comprenant des masses pesantes montées en chapelet sur le conduit flexible 20. On a représenté également sur cette figure 4 un fond marin 52 et une installation de fond 54 située à l'aplomb du flotteur 24. Ce dernier va alors être immergé et s'enfoncer dans l'eau en dévidant, ou en déroulant, le conduit flexible 20 pré-enroulé sur l'installation de surface. En effet, en dévidant le conduit flexible 20, qui, indépendamment des ballasts 50 est lui-même pesant, le flotteur 24 est soumis à un poids qui s'accroît progressivement, et qui provoque alors la descente du flotteur 24 et de la conduite tubulaire 18. Le conduit flexible 20 peut également être inondé afin d'accroître son poids et lester plus efficacement encore le flotteur 24.

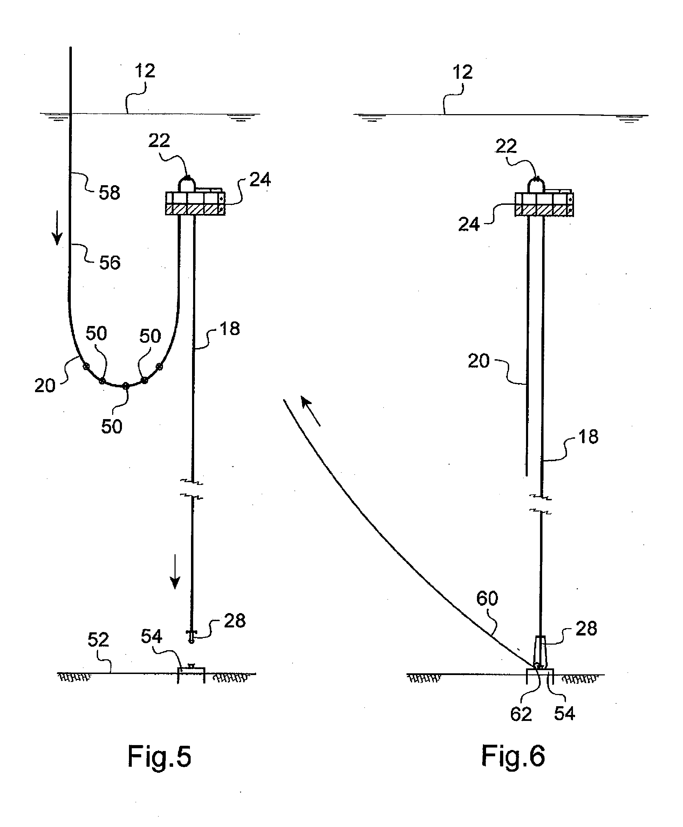

On se reportera maintenant sur la figure 5, où le flotteur 24 est immergé et où une longueur importante de conduit flexible 20 s'étend en caténaire entre la surface 12 et le flotteur 24 et où surtout, une quantité importante de conduit flexible 20 s'étend en dessous du flotteur 24 afin de le lester. On observera que le conduit flexible 20, à l'opposé du flotteur 24, présente une extrémité 56 reprise par une élingue 58, elle-même reliée à l'installation de surface non représentée sur cette figure. Conséquemment, le flotteur 24 et la conduite tubulaire 18 sont entraînés progressivement vers le fond marin 52 et l'extrémité inférieure 28 de conduite tubulaire 18 est alors également entraînée en translation vers le fond marin 52, et partant, vers l'installation de fond 54.

Ainsi, la descente de la conduite tubulaire 18 et du flotteur et l'approche de l'extrémité de la conduite tubulaire 28 vers l'installation de fonds 54 sont contrôlées par la quantité de flexible dévidée. En particulier, lorsque l'extrémité inférieure 28 approche du fonds marin 52 le déroulement de la conduite flexible 20 est arrêté.

Par ailleurs, le flotteur 24 est avantageusement équipé d'un compartiment étanche rempli d'un gaz inerte et ce compartiment est relié à la conduite tubulaire 18, qui est en l'espèce flexible et qui est elle-même remplie de gaz inerte, de manière à pouvoir maintenir le flotteur 24 à la pression hydrostatique et aussi éviter son écrasement durant la descente. En effet, la conduite tubulaire flexible 18 peut supporter des pressions par exemple de 100-200 bars alors que le flotteur 24 ne peut être exposé à des pressions supérieures à 5 bars environ sans risque d'explosion.

De plus, comme illustré sur la figure 6, l'extrémité inférieure 28 de la conduite tubulaire 18 est accrochée à un câble de tirage 60 lequel est engagé dans des moyens de renvoi 62 montés sur l'installation de fond 54 et se prolonge au-delà vers la surface 12 de manière à pouvoir être tiré depuis l'installation de surface ou tout autre bâtiment de surface. De la sorte, l'extrémité inférieure 28 est précisément guidée et entraînée vers l'installation de fond 54. Durant cette dernière opération, le conduit flexible 20 peut être désolidarisé de l'installation de surface.

De manière préférée, des élingues de sécurité relient la fondation 54 à l'extrémité inférieure de la conduite tubulaire 28. Elles permettent de maintenir le dispositif sous l'eau en cas de rupture du câble de tirage.

## Revendications

1. Méthode d'installation d'une colonne sous-marine montante pour le transport des hydrocarbures entre un fond marin (52) et une surface marine (12), ladite méthode étant du type selon laquelle :
- on fournit une installation de surface (10) et un flotteur (24) aptes à flotter sur ladite surface marine (12) ;
- on fournit une conduite tubulaire (18) présentant deux extrémités opposées (26, 28), et on suspend ladite conduite tubulaire audit flotteur (24) par l'une desdites deux extrémités (26) de conduite, tandis que ladite conduite tubulaire (18) s'étend vers ledit fond marin (52) ;
- on fournit un conduit flexible (20) pour relier ledit flotteur (24) et ladite installation de surface (10), ledit conduit flexible (20) étant raccordé à ladite une desdites extrémités de conduite (26) tubulaire et;
- on leste ledit flotteur (24) pour l'immerger et entraîner ladite autre extrémité de conduite (28) vers ledit fond marin (52) de manière à pouvoir raccorder ladite autre extrémité (28) de conduite dans ledit fond marin (52) ;
**caractérisée en ce qu'**on dévide ledit conduit flexible (20) depuis ladite installation de surface (10) pour l'étendre en caténaire entre ledit flotteur (24) et ladite installation de surface (10) de manière à lester ledit flotteur (24) avec ledit conduit flexible (20) dévidé et provoquer l'immersion dudit flotteur (24), par quoi ladite autre extrémité de conduite (28) est entraînée vers ledit fond marin (52).

2. Méthode d'installation selon la revendication 1, **caractérisée en ce qu'**on dévide ledit conduit flexible (20) entre ledit flotteur (24) et ledit fond marin (52) pour lester ledit flotteur (54).

3. Méthode d'installation selon la revendication 1 ou 2, **caractérisée en ce qu'**on inonde ledit conduit flexible (20) pour augmenter le poids dudit conduit flexible dévidé.

4. Méthode d'installation selon l'une quelconque des revendications 1 à 3, **caractérisée en ce qu'**on fournit des ballasts (50) et on équipe ledit conduit flexible (20) avec lesdits ballasts pour augmenter le poids dudit conduit flexible dévidé.

5. Méthode d'installation selon l'une quelconque des revendications 1 à 4, **caractérisée en ce qu'**on raccorde ledit conduit flexible (20) et ladite une desdites extrémités de conduite tubulaire (26) avant de suspendre ladite conduite tubulaire audit flotteur (24).

6. Méthode d'installation selon l'une quelconque des revendications 1 à 5, **caractérisée en ce qu'**on fournit un flotteur (24) de forme générale cylindrique à directrice circulaire présentant une hauteur h et un diamètre D dont la fraction est inférieure à 1,5.

7. Méthode d'installation selon la revendication 6, **caractérisée en ce qu'**on fournit un flotteur (24) présentant une fente radiale (40), et **en ce qu'**on entraîne latéralement ladite une desdites extrémités de conduite tubulaire (26) à travers ladite fente radiale (40) pour suspendre ladite conduite tubulaire (18) audit flotteur (24).

8. Méthode d'installation selon l'une quelconque des revendications 1 à 7, **caractérisée en ce qu'**on fournit une conduite tubulaire (18) flexible.

9. Méthode d'installation selon la revendication 8, **caractérisée en ce qu'**on raccorde ladite conduite tubulaire flexible (18) avec ledit flotteur (24) pour maintenir ledit flotteur sous pression hydrostatique.

10. Méthode d'installation selon l'une quelconque des revendications 1 à 9, **caractérisée en ce qu'**on fournit une installation de fond (54) située sur ledit fond marin (52) pour recevoir ladite autre extrémité de conduite (28), et **en ce qu'**on fournit en outre un câble de tirage (60) et des moyens de renvoi (62) dudit câble de tirage (60), lesdits moyens de renvoi étant montés sur ladite installation de fond (54), tandis que ledit câble de tirage (60) est d'une part accroché à ladite autre extrémité de conduite (28) et d'autre part engagé à travers lesdits moyens de renvoi (62) pour pouvoir être étiré vers la surface (12).

## Patentansprüche

1. Verfahren zur Installation einer Unterwasser-Steigrohrleitung für den Transport von Kohlenwasserstoffen zwischen einem Meeresboden (52) und einer Meeresoberfläche (12), wobei das Verfahren von dem Typ ist, wonach:
- eine Oberflächeninstallation (10) und ein Schwimmer (24) bereitgestellt werden, die angepasst sind, um auf der Meeresoberfläche (12) zu schwimmen,
- eine Rohrleitung (18) bereit gestellt wird, die zwei entgegengesetzte Enden (26, 28) aufweist, und die Rohrleitung an dem Schwimmer (24) über eines der zwei Leitungsenden (26) aufgehängt wird, während die Rohrleitung (18) sich zu dem Meeresboden (52) hin erstreckt;
- eine flexible Leitung (20) bereitgestellt wird, um den Schwimmer (24) und die Oberflächeninstallation (10) zu verbinden, wobei die flexible Leitung (20) mit einem der Rohrleitungsenden (26) verbunden ist, und
- der Schwimmer (24) mit Ballast beladen wird, um ihn einzutauchen und das andere Leitungsende (28) zu dem Meeresboden (52) hin mitzunehmen, derart, dass das andere Leitungsende (28) in dem Meeresboden (52) verbunden werden kann,
**dadurch gekennzeichnet, dass** die flexible Leitung (20) von der Oberflächeninstallation (10) abgewickelt wird, um sie in Seillinie zwischen dem Schwimmer (24) und der Oberflächeninstallation (10) zu spannen, derart, dass der Schwimmer (24) mit der abgewickelten flexiblen Leitung (20) mit Ballast beladen wird und das Eintauchen des Schwimmers (24) bewirkt wird, wodurch das andere Leitungsende (28) zu dem Meeresboden (52) hin mitgenommen wird.

2. Installationsverfahren nach Anspruch 1, **dadurch gekennzeichnet, dass** die flexible Leitung (20) zwischen dem Schwimmer (24) und dem Meeresboden (52) abgewickelt wird, um den Schwimmer (54 sie!) mit Ballast zu beladen.

3. Installationsverfahren nach Anspruch 1 oder Anspruch 2, **dadurch gekennzeichnet, dass** die flexible Leitung (20) überflutet wird, um das Gewicht der abgewickelten flexiblen Leitung zu erhöhen.

4. Installationsverfahren nach einem der Ansprüche 1 bis 3, **dadurch gekennzeichnet, dass** Ballasttanks (50) bereitgestellt werden und die flexible Leitung (20) mit den Ballasttanks versehen wird, um das Gewicht der abgewickelten flexiblen Leitung zu erhöhen.

5. Installationsverfahren nach einem der Ansprüche 1 bis 4, **dadurch gekennzeichnet, dass** die flexible Leitung (20) und das eine der Rohrleitungsenden (26) verbunden werden, bevor die Rohrleitung an dem Schwimmer (24) aufgehängt wird.

6. Installationsverfahren nach einem der Ansprüche 1 bis 5, **dadurch gekennzeichnet, dass** ein Schwimmer (24) allgemein zylindrischer Form mit kreiskreisförmiger Mantellinie bereitgestellt wird, der eine Höhe h und einen Durchmesser D aufweist, deren Bruchzahl kleiner als 1,5 ist.

7. Installationsverfahren nach Anspruch 6, **dadurch gekennzeichnet, dass** ein Schwimmer (24) bereitgestellt wird, der einen radialen Schlitz (40) aufweist, und dass das eine der Rohrleitungsenden (26) durch den radialen Schlitz (40) hindurch seitlich mitgenommen wird, um die Rohrleitung (18) an dem Schwimmer (24) aufzuhängen.

8. Installationsverfahren nach einem der Ansprüche 1 bis 7, **dadurch gekennzeichnet, dass** eine flexible Rohrleitung (18) bereitgestellt wird.

9. Installationsverfahren nach Anspruch 8, **dadurch gekennzeichnet, dass** die flexible Rohrleitung (18) mit dem Schwimmer (24) verbunden wird, um den Schwimmer unter hydrostatischem Druck zu halten.

10. Installationsverfahren nach einem der Ansprüche 1 bis 9, **dadurch gekennzeichnet, dass** eine Bodeninstallation (54) bereitgestellt wird, die sich auf dem Meeresboden (52) befindet, um das andere Leitungsende (28) aufzunehmen, und dass ferner ein Zugseil (60) und Umlenkmittel (62) für das Zugseil (60) bereitgestellt werden, wobei die Umlenkmittel (62) an der Bodeninstallation (54) montiert sind, während das Zugseil (60) einerseits an dem anderen Leitungsende (28) befestigt ist und andererseits durch die Umlenkmittel (62) in Eingriff ist, um zu der Oberfläche (12) hin gespannt werden zu können.

## Claims

1. A method for installing an underwater riser to transport hydrocarbons between a seabed (52) and a sea surface (12), said method being of the type whereby:
- a surface installation (10) and a float (24) suitable for floating on said sea surface (12) are provided;
- a tubular pipe (18) is provided that has two opposite ends (26, 28), and said tubular pipe is suspended from said float (24) by one of said two pipe ends (26), while said tubular pipe (18) extends toward said seabed (52);
- a flexible pipe (20) is provided, to link said float (24) and said surface installation (10), said flexible pipe (20) being connected to said one of said tubular pipe ends (26) and;
- said float (24) is weighted to submerge it and drive said other pipe end (28) toward said seabed (52) so as to be able to connect said other pipe end (28) in said seabed (52);
**characterized in that** said flexible pipe (20) is unwound from said surface installation (10) to extend it catenary-fashion between said float (24) and said surface installation (10) so as to weight said float (24) with said unwound flexible pipe (20) and provoke the submersion of said float (24), whereby said other pipe end (28) is driven toward said seabed (52).

2. The installation method as claimed in claim 1, **characterized in that** said flexible pipe (20) is unwound between said float (24) and said seabed (52) to weight said float (54).

3. The installation method as claimed in claim 1 or 2, **characterized in that** said flexible pipe (20) is flooded to increase the weight of said unwound flexible pipe.

4. The installation method as claimed in any one of claims 1 to 3, **characterized in that** ballasts (50) are provided and said flexible pipe (20) is equipped with said ballasts to increase the weight of said unwound flexible pipe.

5. The installation method as claimed in any one of claims 1 to 4, **characterized in that** said flexible pipe (20) and said one of said tubular pipe ends (26) are connected before suspending said tubular pipe from said float (24).

6. The installation method as claimed in any one of claims 1 to 5, **characterized in that** a float (24) is provided that is of generally cylindrical form with circular directrice having a height h and a diameter D of which the fraction is less than 1.5.

7. The installation method as claimed in claim 6, **characterized in that** a float (24) is provided that has a radial slot (40), and **in that** said one of said tubular pipe ends (26) is driven laterally through said radial slot (40) to suspend said tubular pipe (18) from said float (24).

8. The installation method as claimed in any one of claims 1 to 7, **characterized in that** a flexible tubular pipe (18) is provided.

9. The installation method as claimed in claim 8, **characterized in that** said flexible tubular pipe (18) is connected with said float (24) to keep said float under hydrostatic pressure.

10. The installation method as claimed in any one of claims 1 to 9, **characterized in that** a bottom installation (54) is provided, situated on said seabed (52) to receive said other pipe end (28), and **in that** a pulling cable (60) is also provided together with return means (62) for said pulling cable (60), said return means being mounted on said bottom installation (54), whereas said pulling cable (60) is, on the one hand, attached to said other pipe end (28) and, on the other hand, engaged through said return means (62) to be able to be drawn toward the surface (12).
